(19) **European Patent Office**

Europäisches Patentamt

European Patent Office

Office européen des brevets

(11) **EP 1 067 097 A1**

(12) **EUROPEAN PATENT APPLICATION**
published in accordance with Art. 158(3) EPC

(43) Date of publication:
**10.01.2001 Bulletin 2001/02**

(21) Application number: **99962506.4**

(22) Date of filing: **24.12.1999**

(51) Int. Cl.$^7$: **C03C 3/06**, C03B 8/04,
C03B 20/00

(86) International application number:
**PCT/JP99/07282**

(87) International publication number:
**WO 00/39040 (06.07.2000 Gazette 2000/27)**

(84) Designated Contracting States:
**AT BE CH CY DE DK ES FI FR GB GR IE IT LI LU
MC NL PT SE**

(30) Priority: **25.12.1998 JP 37001498**

(71) Applicant:
**ASAHI GLASS COMPANY LTD.
Tokyo 100-8405 (JP)**

(72) Inventors:
• **IKUTA, Yoshiaki,
Asahi Glass Company, Limited
Yokohama-shi, Kanagawa 2221-8755 (JP)**
• **KIKUGAWA, Shinya,
Asahi Glass Company, Limited
Yokohama-shi, Kanagawa 2221-8755 (JP)**

• **MASUI, Akio
Tokyo 152-0003 (JP)**
• **SHIMODAIRA, Noriaki,
Asahi Glass Company, Limited
Yokohama-shi, Kanagawa 2221-8755 (JP)**
• **YOSHIZAWA, Shuhei,
Asahi Glass Company, Limited
Yokohama-shi, Kanagawa 2221-8755 (JP)**

(74) Representative:
**Müller-Boré & Partner
Patentanwälte
Grafinger Strasse 2
81671 München (DE)**

(54) **SYNTHETIC QUARTZ GLASS AND METHOD FOR PREPARATION THEREOF**

(57) A synthetic quartz glass to be used for light in a vacuum ultraviolet region with a wavelength of at most 175 nm, which is characterized in that the OH group content in the synthetic quartz glass is less than 10 ppm, and it contains substantially no reduction type defects.

EP 1 067 097 A1

Printed by Xerox (UK) Business Services
2.16.7 (HRS)/3.6

## EP 1 067 097 A1

**Description**

BACKGROUND OF THE INVENTION

TECHNICAL FIELD

The present invention relates to a synthetic quartz glass and a process for producing it, particularly to a synthetic quartz glass to be used as optical components such as a lens, a prism, an etalon, a photomask and a pericle to be used for light in the vacuum ultraviolet region with a wavelength of at most 175 nm, and a process for producing it.

BACKGROUND ART

A synthetic quartz glass has such characteristics that it is transparent within a wavelength range of as wide as from the near infrared region to the ultraviolet region, it has an extremely small thermal expansion coefficient and is excellent in dimensional stability, and it contains substantially no metal impurity and has a high purity. Accordingly, a synthetic quartz glass has been mainly used for optical components of a conventional optical apparatus employing g-line or i-line as a light source.

Along with high-integration of LSI in recent years, techniques to draw finer and thinner lines have been required in an optical lithography technology to draw an integration circuit pattern on a wafer, and accordingly use of light having a shorter wavelength as an exposure light source has been promoted. For example, for a light source of a stepper for lithography, a KrF excimer laser (wavelength: 248 nm), an ArF excimer laser (wavelength: 193 nm) or a $F_2$ laser (wavelength: 157 nm) is now to be used, as advanced from conventional g-line (wavelength: 436 nm) and i-line (wavelength: 365 nm).

A synthetic quartz glass constituting an optical element of an optical system wherein such a light source is employed, is required to have light transmittance in a vacuum ultraviolet region with a wavelength of at most 175 nm (hereinafter referred to simply as "vacuum ultraviolet light transmittance").

In order to improve the vacuum ultraviolet light transmittance, JP-A-8-91867 proposes a synthetic quartz glass wherein the OH group content is at most 200 ppm, the chlorine concentration is at most 2 ppm, and the ≡Si-Si≡ concentration is at most $1 \times 10^{15}$/cm$^3$. JP-A-9-235134 proposes a synthetic quartz glass wherein the OH group content is from 10 to 400 ppm, and the concentration of each of reduction type defects and oxidation type defects is $5 \times 10^{16}$/cm$^3$. JP-A-7-267674 proposes a synthetic quartz glass which has an OH group content of from 100 to 2000 ppm and which contains a transition metal, an alkali metal or an alkaline earth metal in a concentration not higher than a prescribed concentration.

Conventional synthetic quartz glasses are all designed to improve the vacuum ultraviolet light transmittance by adjusting the OH group content within a predetermined range, but it has been not necessarily possible to obtain a high transmittance in a vacuum ultraviolet region with a wavelength of at most 175 nm.

The present invention has an object to provide a synthetic quartz glass which constantly exhibits an excellent vacuum ultraviolet light-transmittance and a process for its production.

The present invention also has an object to provide a synthetic quartz glass excellent in the durability to ultraviolet light (i.e. deterioration of the transmittance by irradiation with ultraviolet lights being little) and a process for its production.

DISCLOSURE OF THE INVENTION

The present invention provides a synthetic quartz glass to be used for light in a vacuum ultraviolet region with a wavelength of at most 175 nm, which is characterized in that the OH group content in the synthetic quartz glass is less than 10 ppm, and it contains substantially no reduction type defects (hereinafter referred to as "the first glass").

Further, the present invention provides a synthetic quartz glass to be used for light in a vacuum ultraviolet region with a wavelength of at most 160 nm, which is characterized in that the OH group content in the synthetic quartz glass at most 5 ppm, and it contains substantially no reduction type defects (hereinafter referred to as "the second glass").

Further, in the following, when the synthetic quartz glass of the present invention is referred to, such reference relates to a matter common to the first and second glasses.

BEST MODE FOR CARRYING OUT THE INVENTION

The present inventors have found that the vacuum ultraviolet light transmittance of a synthetic quartz glass is substantially influenced by (1) the OH group content in the synthetic quartz glass and (2) the content of reduction type

defects represented by $\equiv$Si-Si$\equiv$. Namely, it has been found possible to obtain a high vacuum ultraviolet light transmittance by controlling the contents of the OH groups and the reduction type defects.

Therefore, they have studied influences of the contents of the OH groups and the reduction type defects over the vacuum ultraviolet light transmittance. As a result, it has been found that the OH group content in the synthetic quartz glass is influential over the light transmittance in a vacuum ultraviolet region with a wavelength of at most 175 nm, and the higher the OH group content, the lower the light transmittance. If it is less than 10 ppm, a high light transmittance can be obtained, and particularly when it is not more than 5 ppm, an excellent light transmittance can be obtained even at a wavelength of at most 165 nm.

Further, in the present invention, the reduction type defects are meant for $\equiv$Si-Si$\equiv$ and have an absorption band having a wavelength of 163 nm at the center. The internal transmittance $T_{163}$ (%/cm) at 163 nm is assumed to be represented by the following formula (1) by the OH group content $C_{OH}$ (ppm) in the synthetic quartz glass.

$$T_{163}(\%/cm) \gtrsim \exp(-0.02C_{OH}{}^{0.85}) \times 100 \tag{1}$$

However, if there are reduction type defects, the actual transmittance ($T_{163}$) at a wavelength of 163 nm becomes smaller than the value on the right hand side of the Formula (1), since an absorption band having 163 nm at the center exists. Thus, it has been found that if substantially no reduction type defects are contained, it is possible to obtain an excellent vacuum ultraviolet light transmittance, and the present invention has been accomplished.

In the present invention, "substantially no reduction type defects are contained" means that the Formula (1) relating to the internal transmittance at 163 nm is satisfied.

With the first and second glasses, it is preferred that the internal transmittance at a wavelength of 157 nm is at least 80%/cm.

In the synthetic quartz glass of the present invention, it is not essential but preferred that the hydrogen molecule content is at least $5 \times 10^{16}$ molecules/cm$^3$. Hydrogen molecules have a function to suppress formation of defects under irradiation with ultraviolet lights, and if the content is at least $5 \times 10^{16}$ molecules/cm$^3$, an adequate durability to ultraviolet light can be obtained, such being preferred. It is more preferably from $1 \times 10^{17}$ to $5 \times 10^{18}$ molecules/cm$^3$, still more preferably from $5 \times 10^{17}$ to $5 \times 10^{18}$ molecules/cm$^3$.

Metal impurities such as alkali metals, alkaline earth metals or transition metals in the synthetic quartz glass of the present invention not only deteriorate the vacuum ultraviolet light transmittance but will be a factor to deteriorate the durability to ultraviolet light, and their content is preferably as small as possible. Specifically, the total content of metal impurities is preferably at most 100 ppb, particularly preferably at most 50 ppb.

Further, chlorine will also be a factor to deteriorate the durability to ultraviolet light, and the chlorine content in the synthetic quartz glass is preferably as small as possible. Specifically, it is preferably not more than 100 ppb, particularly preferably not more than 50 ppb.

In the present invention, as a process for producing the synthetic quartz glass, a direct method, a soot method (VAD method, OVD method) or a plasma method may, for example, be mentioned. The soot method is particularly preferred, since the synthesizing temperature is low, and contamination with impurities such as chlorine and metals can be avoided. By the soot method, it is possible to control the OH group content in the synthetic quartz glass within a relatively wide range.

Now, a process for producing the synthetic quartz glass of the present invention by the soot method will be described in detail.

Step (a): Fine particles of quartz glass obtained by subjecting a quartz glass-forming material to flame hydrolysis, are deposited and grown on a substrate to form a porous quartz glass body. The glass-forming material is not particularly limited so long as it is a gasifiable material. However, it may, for example, be a halogenated silicon compound such as a chloride, such as $SiCl_4$, $SiHCl_3$, $SiH_2Cl_2$ or $SiCH_3Cl_3$, a fluoride such as $SiF_4$, $SiHF_3$ or $SiH_2F_2$, a bromide such as $SiBr_4$ or $SiHBr_3$, an iodide such as $SiI_4$, or an alkoxysilane represented by $R_nSi(OR)_{4-n}$ (wherein R is a $C_{1-4}$ alkyl group, and n is an integer of from 0 to 3). Further, as the above substrate, a seed rod made of quartz glass (for example, a seed rod disclosed in JP-B-63-24973) may be employed. Further, not only a rod shaped substrate, but also a plate shaped substrate may be employed.

Step (b): The porous quartz glass body is held in fluorine or a fluorine-containing atmosphere at a temperature of not higher than 600°C to obtain a porous quartz glass containing fluorine. As the fluorine-containing atmosphere, an inert gas atmosphere containing from 0.1 to 100 volume% of a fluorine-containing gas (such as $SiF_4$, $SF_6$, $CHF_3$, $CF_4$ or $F_2$) is preferred.

It is preferred to carry out the treatment in such an atmosphere at a temperature of not higher than 600°C under a pressure of from 0.1 to 10 atm for from a few tens minutes to a few hours. In the present invention, "atm" and "Torr" are not gauge pressures but mean absolute pressures.

Further, in Step (b), it is preferred that while maintaining the atmosphere under reduced pressure (not higher than 100 Torr, particularly preferably not higher than 10 Torr) at a temperature of not higher than 600°C, a fluorine-containing gas is introduced until the pressure became normal pressure to form a fluorine-containing atmosphere, whereby fluorine can be doped to the porous quartz glass body uniformly and in a short time.

In such a case, fluorine can be doped by substituting fluorine for OH groups in the porous quartz glass body, as shown by the Formula (2):

$$\equiv Si\text{-}OH + F \rightarrow \equiv Si\text{-}F + OH \tag{2}$$

If Step (b) is carried out in a range other than the above conditions, the reactivity of fluorine gas becomes high, and reduction type defects ($\equiv Si\text{-}Si\equiv$) tend to be formed in the synthetic quartz glass body, although the mechanism is not certain. However, even when fluorine is doped at a temperature exceeding 600°C, formation of reduction type defects can be suppressed by carrying out the operation in an atmosphere containing from 5 to 90 volume% of oxygen. Further, the fluorine content is preferably equal to the OH group content which decreases by fluorine doping. The fluorine content in the synthetic quartz glass is preferably from 50 to 3000 ppm.

Step (c): The porous quartz glass body containing fluorine is heated to the transparent vitrification temperature in an atmosphere containing substantially no fluorine, for transparent vitrification, to obtain a synthetic quartz glass.

The transparent vitrification temperature is usually from 1300 to 1600°C, particularly preferably from 1350 to 1500°C.

The atmosphere containing substantially no fluorine is not particularly limited so long as a fluorine-containing gas (such as $SiF_4$, $SF_6$, $CHF_3$, $CF_4$ or $F_2$) is not more than 0.1 volume% at the initiation of the treatment of Step (c), and it is preferably an atmosphere composed of 100% of an inert gas such as helium or an atmosphere containing, as the main component, an inert gas such as helium. The pressure may be reduced pressure or normal pressure. Particularly in the case of the normal pressure, helium gas may be employed. In the case of the reduced pressure, it is preferably 100 Torr or less.

It is preferred to further have a Step (g) of reducing the pressure of the atmosphere and maintaining the porous quartz glass body containing fluorine under reduced pressure for a predetermined time, between Steps (b) and (c).

Further, the synthetic quartz glass of the present invention can be produced also by a Step (e) of maintaining the porous quartz glass body after Step (a) under a pressure of at most 1 Torr at a temperature of from 1000 to 1300°C for a predetermined time for dehydration, followed by raising the temperature to the transparent vitrification temperature under a pressure of at most 1 Torr for transparent vitrification.

Further, in the production of the synthetic quartz glass of the present invention, after Step (c) or Step (e), it is possible to carry out a Step (f) of doping hydrogen into the synthetic quartz glass by heat treating the transparent quartz glass body obtained from Step (c) or Step (e) at a temperature of not higher than 600°C in an atmosphere containing hydrogen gas. By carrying out hydrogen treatment at a low temperature, it is possible to prevent formation of defects such as $\equiv Si\text{-}H\equiv$ or $\equiv Si\text{-}Si\equiv$ which bring about deterioration of the vacuum ultraviolet light transmittance or the ultraviolet resistance. As the atmosphere containing hydrogen gas, an inert gas atmosphere containing from 0.1 to 100 volume% of hydrogen gas, is preferred.

The synthetic quartz glass of the present invention may be used for a lens of a projection exposure apparatus (such as a stepper lens) or other optical components. To obtain optical characteristics required as the optical components, it is necessary to optionally carry out heat treatment such as uniformalization, molding or annealing (hereinafter referred to as optical heat treatment). The optical heat treatment may be carried out before or after Step (f).

However, the optical heat treatment requires a high temperature of from 800 to 1500°C, and accordingly, even if hydrogen is incorporated in Step (f), it is possible that the hydrogen molecule content decreases by a subsequent optical heat treatment. Accordingly, in a case where an optical heat treatment is carried out after Step (f), it is preferred to carry out the treatment in an atmosphere containing from 0.1 to 100 volume% of hydrogen gas under a pressure of from 1 to 30 atm. Further, in a case where an optical heat treatment is carried out after Step (f), a furnace for the optical heat treatment is required to have an explosion-proof structure. Accordingly, it is preferred to carry out the optical heat treatment before Step (f).

Now, the present invention will be described in further detail with reference to Examples of the present invention and Comparative Examples. However, the present invention is by no means restricted by these Examples.

EXAMPLES 1 to 14

Fine particles of $SiO_2$ formed by subjecting $SiCl_4$ to hydrolysis in an oxyhydrogen flame by a soot method, were deposited and grown on a substrate to form a porous quartz glass body of 400 mm in diameter × 600 mm in length. The porous quartz glass body was placed in an electric furnace capable of controlling the atmosphere and maintained under a reduced pressure of at most 10 Torr at room temperature, and then a helium gas containing $SiF_4$ was

introduced to normal pressure. In this atmosphere, the porous quartz glass body was held under normal pressure at room temperature for a few hours to carry out dehydration of the glass body. Then, while maintaining it under reduced pressure of at most 10 Torr in an atmosphere containing substantially no fluorine, the temperature was raised to 1450°C and maintained at this temperature for 10 hours to obtain a synthetic quartz glass (200 mm in diameter × 450 mm in length).

Further, the obtained synthetic quartz glass was cut to a size of 200 mm in diameter × 10 mm in thickness. With respect to each of synthetic quartz glasses of Examples 1 to 13, it was held in a hydrogen-containing atmosphere under the condition shown in Table 1 for 30 hours to carry out doping of hydrogen into the synthetic quartz glass.

In the above production process, the content of OH groups and the content of reduction type defects in the obtained synthetic quartz glass were controlled by adjusting the volume ratio of oxygen and hydrogen gas in the oxyhydrogen flame at the time of producing a porous quartz glass, the concentration of a fluorine compound, the treating time and the treating temperature at the time of maintaining the porous glass body in the atmosphere containing a fluorine compound. Further, the content of hydrogen molecules in the synthetic quartz glass was controlled by adjusting the treating temperature, the hydrogen concentration in the atmosphere and the total pressure at the time of carrying out the hydrogen doping. Further, details of the treating conditions in the production process of each example, are shown in Table 1.

Table 1

| | Synthetic conditions ($O_2/H_2$ volume ratio) | Fluorine treatment conditions (atmosphere, treating temperature, treating time) | Hydrogen treatment conditions (treating temperature, atmosphere, pressure) |
|---|---|---|---|
| Example 1 | 15/25 | $SiF_4$/He=1/99vol% • 25°C • 5hr | 500°C • $H_2$=100vol% • 10atm |
| Example 2 | 15/25 | $SiF_4$/He=1/99vol% • 25°C • 10hr | 500°C • $H_2$=100vol% • 10atm |
| Example 3 | 16/22 | $SiF_4$/He=1/99vol% • 25°C • 10hr | 500°C • $H_2$=100vol% • 10atm |
| Example 4 | 15/25 | $SiF_4$/He=1/99vol% • 300°C • 5hr | 500°C • $H_2$=100vol% • 10atm |
| Example 5 | 15/25 | $SiF_4$/He=1/99vol% • 550°C • 5hr | 500°C • $H_2$=100vol% • 10atm |
| Example 6 | 15/25 | $SiF_4$/He=1/99vol% • 700°C • 5hr | 500°C • $H_2$=100vol% • 10atm |
| Example 7 | 15/25 | $SiF_4$/He=1/99vol% • 900°C • 5hr | 500°C • $H_2$=100vol% • 10atm |
| Example 8 | 15/25 | $SiF_4$/He=1/99vol% • 25°C • 5hr | 700°C • $H_2$=100vol% • 10atm |
| Example 9 | 14/26 | $SiF_4$/He=1/99vol% • 25°C • 30min | 500°C • $H_2$=100vol% • 10atm |
| Example 10 | 14/26 | $SiF_4$/He=1/99vol% • 25°C • 10min | 500°C • $H_2$=100vol% • 10atm |
| Example 11 | 15/25 | No treatment | 500°C • $H_2$=100vol% • 10atm |
| Example 12 | 15/25 | $SiF_4$/He=1/99vol% • 25°C • 5hr | 500°C • $H_2$=100vol% • 1atm |
| Example 13 | 15/25 | $SiF_4$/He=1/99vol% • 25°C • 5hr | 500°C • $H_2$/He=15/85vol% • 1atm |
| Example 14 | 15/25 | $SiF_4$/He=1/99vol% • 25°C • 10hr | No treatment |

## EXAMPLES 15 to 19

Fine particles of $SiO_2$ formed by subjecting $SiCl_4$ to hydrolysis in an oxyhydrogen flame by a soot method, were deposited on a substrate to obtain a porous quartz glass body of 400 mm in diameter × 600 mm in length. The porous quartz glass body was placed in an electric furnace capable of controlling the atmosphere, and the temperature was raised under a reduced pressure of at most 1 Torr and maintained at 1200°C for a predetermined time. Then, the temperature was raised to 1450°C and maintained at this temperature for 10 hours to obtain a synthetic quartz glass (200 mm in diameter × 450 mm in length).

The obtained synthetic quartz glass was cut into a size of 200 mm in diameter × 10 mm in thickness, and with respect to each of synthetic quartz glasses of Examples 15 to 18, it was held in a hydrogen-containing atmosphere under the conditions shown in Table 2 for 30 hours to carry out hydrogen doping into the synthetic quartz glass.

In the above production process, the content of OH groups and the content of reduction type defects in the synthetic quartz glass were controlled by adjusting the holding time at 1200°C. Further, the content of hydrogen molecules in the synthetic quartz glass was controlled by adjusting the treating temperature, the hydrogen concentration in the atmosphere and the total pressure at the time of carrying out hydrogen doping. Further, details of the treating conditions in the production process of each Example, are shown in Table 2.

Table 2

|  | Vitrification (Holding time at 1200°C) | Hydrogen treatment conditions (treating temperature, atmosphere, pressure) |
|---|---|---|
| Example 15 | 10hrs | 500°C • $H_2$=100vol% • 10atm |
| Example 16 | 25hrs | 500°C • $H_2$=100vol% • 10atm |
| Example 17 | 40hrs | 500°C • $H_2$=100vol% • 10atm |
| Example 18 | Nil | 500°C • $H_2$=100vol% • 10atm |
| Example 19 | 20hrs | No treatment |

The OH group contents, the hydrogen molecule contents, the 163 nm internal transmittances and the presence or absence of reduction type defects of the synthetic quartz glasses obtained in Examples 1 to 18, were determined in accordance with the following methods. The results are shown in Table 3.

Preparation of samples:

The peripheries of the synthetic quartz glasses obtained in Examples 1 to 19 were ground to obtain blocks of 180 mm in diameter $\times$ 10 mm in thickness, which were used as samples.
Further, the surface portions and the peripheral portions of the obtained synthetic quartz glasses were ground to obtain blocks of 180 mm in diameter $\times$ 4 mm in thickness, which were used as samples.

OH group content:

Measurement by an infrared spectrophotometer was carried out, and the OH group content was obtained from the absorption peak at a wavelength of 2.7 $\mu$m (J.P. Williams et. al., Ceramic Bulletin, 55(5), PP. 524, 1976).

Hydrogen molecule content:

Raman spectrometry was carried out, and the hydrogen molecule content [molecules/$cm^3$] was obtained from the intensity ratio (=$I_{4135}/I_{800}$) of the intensity $I_{4135}$ of the scattering peak at 4135 $cm^{-1}$ of the laser Raman spectrum to the intensity $I_{800}$ of the scattering peak at 800 $cm^{-1}$ which is the fundamental vibration between silicon and oxygen (V.S. Khotimchenko et. al., Zhurnal Prikladnoi Spektroskopii, Vol. 46, No. 6, pp. 987-997, 1986). The detection limit by this method is $1\times10^{16}$ molecules/$cm^3$.

Reduction type defects:

By using a vacuum ultraviolet spectrophotometer (VTMS-502, manufactured by Acton Research), the internal transmittance at 163 nm was measured with respect to synthetic quartz glass samples having thicknesses of 10 mm and 4 mm, and the presence or absence of reduction type defects was evaluated by comparison with the value calculated from the OH group content in the synthetic quartz glasses by the right side of the Formula (1). Namely, when the Formula (1) was satisfied, reduction type defects were regarded as "present", and when the Formula (1) was not satisfied, reduction type defects were regarded as "absent".
Then, with respect to samples prepared from the synthetic quartz glasses of Examples 1 to 19, the following evaluations 1 to 4 were carried out.

Evaluation 1:

Using a vacuum ultraviolet spectrophotometer (VTMS-502, manufactured by Acton Research), the internal transmittance at 172 nm was measured, as an index for transmittance in a vacuum ultraviolet region with a wavelength of at most 175 nm, with respect to samples having thicknesses of 10 mm and 4 mm.

Evaluation 2:

Using a vacuum ultraviolet spectrophotometer (VTMS-502, manufactured by Acton Research), the internal transmittance at 157 nm was measured as an index for transmittance in a vacuum ultraviolet region with a wavelength of at most 160 nm with respect to samples having thicknesses of 10 mm and 4 mm.

Evaluation 3:

Samples having a thickness of 10 mm were irradiated for 3 hours under a condition of $Xe_2^*$ excimer lamp (wavelength: 172 nm) being 10mW/$cm^2$. The transmittance at 163 nm was measured before and after the irradiation, whereby the change ($\Delta T_{163}$) in the transmittance at 163 nm by the irradiation was calculated. The smaller the $\Delta T_{163}$, the better the durability to ultraviolet light.

The results of the respective evaluations are shown in Table 4. Examples 1 to 5, 12 to 17 and 19 represent Examples of the present invention, and other Examples represent Comparative Examples.

Table 3

| | OH group content (ppm) | Hydrogen molecule content (molecules/$cm^3$) | 163 nm internal transmittance (%/cm) | Presence or absence of reduction type defects |
|---|---|---|---|---|
| Example 1 | 6.4 | $1.8 \times 10^{18}$ | 91.8 | Absent |
| Example 2 | 4.6 | $1.8 \times 10^{18}$ | 93.7 | Absent |
| Example 3 | 2.7 | $1.8 \times 10^{18}$ | 96.0 | Absent |
| Example 4 | 5.8 | $1.8 \times 10^{18}$ | 92.3 | Absent |
| Example 5 | 5.6 | $1.8 \times 10^{18}$ | 92.5 | Absent |
| Example 6 | 4.1 | $1.8 \times 10^{18}$ | 66.5 | Present |
| Example 7 | 3.8 | $1.8 \times 10^{18}$ | 15.5 | Present |
| Example 8 | 5.8 | $1.8 \times 10^{18}$ | 84.8 | Present |
| Example 9 | 13.7 | $1.8 \times 10^{18}$ | 84.8 | Absent |
| Example 10 | 23.1 | $1.8 \times 10^{18}$ | 77.4 | Absent |
| Example 11 | 143 | $1.8 \times 10^{18}$ | 29.8 | Absent |
| Example 12 | 6.6 | $1.7 \times 10^{17}$ | 91.6 | Absent |
| Example 13 | 6.5 | $2.1 \times 10^{16}$ | 91.7 | Absent |
| Example 14 | 4.5 | ND | 93.7 | Absent |
| Example 15 | 7.4 | $1.8 \times 10^{18}$ | 90.7 | Absent |
| Example 16 | 4.3 | $1.8 \times 10^{18}$ | 94.1 | Absent |
| Example 17 | 2.8 | $1.8 \times 10^{18}$ | 95.8 | Absent |
| Example 18 | 53 | $1.8 \times 10^{18}$ | 59.4 | Absent |
| Example 19 | 4.2 | ND | 94.1 | Absent |

Table 4

| | Evaluation 1 | Evaluation 2 | Evaluation 3 |
|---|---|---|---|
| | 172 nm internal transmittance (%/cm) | 157 nm internal transmittance (%/cm) | $\Delta T_{163}$ (%/cm) |
| Example 1 | 92.0 | 76.3 | ND |
| Example 2 | 93.7 | 80.5 | ND |
| Example 3 | 95.8 | 86.0 | ND |
| Example 4 | 92.6 | 77.6 | ND |
| Example 5 | 92.8 | 78.1 | ND |
| Example 6 | 77.8 | 73.2 | 0.35 |
| Example 7 | 48.9 | 20.5 | 0.63 |
| Example 8 | 90.4 | 71.3 | 0.10 |
| Example 9 | 86.1 | 63.6 | ND |
| Example 10 | 80.0 | 52.5 | ND |
| Example 11 | 40.5 | 10.9 | ND |
| Example 12 | 91.8 | 75.9 | 0.01 |
| Example 13 | 91.9 | 76.1 | 0.05 |
| Example 14 | 93.8 | 80.8 | 0.05 |
| Example 15 | 91.1 | 74.2 | ND |
| Example 16 | 94.1 | 81.3 | ND |
| Example 17 | 95.7 | 85.7 | ND |
| Example 18 | 65.6 | 32.2 | ND |
| Example 19 | 94.2 | 81.6 | 0.06 |

INDUSTRIAL APPLICABILITY

According to the present invention, it is possible to obtain a synthetic quartz glass excellent in the vacuum ultraviolet light transmittance. Further, according to the present invention, it is possible to obtain a synthetic quartz glass excellent also in the durability to ultraviolet light. Accordingly, it is suitable for use as a base material constituting an optical element to be used for light in a vacuum ultraviolet region.

**Claims**

1.  A synthetic quartz glass to be used for light in a vacuum ultraviolet region with a wavelength of at most 175 nm, which is characterized in that the OH group content in the synthetic quartz glass is less than 10 ppm, and it contains substantially no reduction type defects.

2.  A synthetic quartz glass to be used for light in a vacuum ultraviolet region with a wavelength of at most 160 nm, which is characterized in that the OH group content in the synthetic quartz glass is at most 5 ppm, and it contains substantially no reduction type defects.

3.  The synthetic quartz glass according to Claim 1 or 2, which is characterized in that the hydrogen molecule content in the synthetic quartz glass is at least $5 \times 10^{16}$ molecules/cm$^3$.

4.  The synthetic quartz glass according to Claim 1 or 2, which is characterized in that the internal transmittance at a wavelength of 157 nm is at least 80%/cm.

5. A process for producing a synthetic quartz glass as defined in Claim 1 or 2, which is characterized by carrying out in this order:

(a) a step of depositing and growing fine quartz glass particles obtained by subjecting a glass-forming material to flame hydrolysis, on a substrate, to form a porous quartz glass body;

(b) a step of holding the porous quartz glass body in a fluorine-containing atmosphere at a temperature of at most 600°C, to obtain a porous quartz glass body containing fluorine; and

(c) a step of raising the temperature of the porous quartz glass body containing fluorine to the transparent vitrification temperature in an atmosphere containing substantially no fluorine, for transparent vitrification, to obtain a synthetic quartz glass.

6. A process for producing a synthetic quartz glass as defined in Claim 1 or 2, which is characterized by carrying out in this order:

(d) a step of depositing and growing fine quartz glass particles obtained by subjecting a glass-forming material to flame hydrolysis, on a substrate, to form a porous quartz glass body; and

(e) a step of holding the porous quartz glass body under a pressure of at most 1 Torr at a temperature of from 1,000 to 1,300°C, for dehydration, followed by raising the temperature to the transparent vitrification temperature under a pressure of at most 1 Torr, for transparent vitrification, to obtain a synthetic quartz glass.

7. The process for producing a synthetic quartz glass according to Claim 5 or 6, which is characterized by including a step of holding the transparent quartz glass body in a hydrogen atmosphere at a temperature of at most 600°C to incorporate hydrogen atoms into the transparent quartz glass body.

# INTERNATIONAL SEARCH REPORT

| | International application No. |
|---|---|
| | PCT/JP99/07282 |

| A. CLASSIFICATION OF SUBJECT MATTER |
|---|
| Int.Cl⁷  C03C3/06, C03B8/04, C03B20/00 |

According to International Patent Classification (IPC) or to both national classification and IPC

| B. FIELDS SEARCHED |
|---|
| Minimum documentation searched (classification system followed by classification symbols)<br>    Int.Cl⁷  C03C3/06, C03B8/04, C03B20/00 |

Documentation searched other than minimum documentation to the extent that such documents are included in the fields searched

| Jitsuyo Shinan Koho | 1922-1996 | Toroku Jitsuyo Shinan Koho | 1994-2000 |
|---|---|---|---|
| Kokai Jitsuyo Shinan Koho | 1971-2000 | Jitsuyo Shinan Toroku Koho | 1996-2000 |

Electronic data base consulted during the international search (name of data base and, where practicable, search terms used)
    JICST(JOIS)

## C. DOCUMENTS CONSIDERED TO BE RELEVANT

| Category* | Citation of document, with indication, where appropriate, of the relevant passages | Relevant to claim No. |
|---|---|---|
| Y | JP, 08-091867, A (Sumitomo Metal Industries, Ltd.),<br>09 April, 1996 (09.04.96),<br>Par.Nos. [0007], [0014] to [0015], [0023], [0029] to [0030]<br>(Family: none) | 1-7 |
| Y | Koichi AWAZU, "Imperfections in Silica Glasses and Their<br>Optical Properties", Bunko Kenkyu, Vol.41, No.2, (1992),<br>p.81-92, especially, see page 90, right column, line 13<br>to page 91, left column, line 25; Fig.17 | 1-4 |
| Y | JP, 02-080343, A (Shin-Etsu Chemical Co., Ltd.),<br>20 March, 1990 (20.03.90),<br>Claim 1; page 2, upper right column, lines 5 to 11; page<br>3, upper right column, lines 4 to 8   (Family: none) | 1-4 |
| Y | US, 5679125, A (Nikon Corporation),<br>21 October, 1997 (21.10.97),<br>Column 2, lines 11 to 24; Column 3, line 48 to Column 5,<br>line 7; Column 6, lines 18 to 34; Claim 1<br>& JP, 08-075901,Claims 1, 3; Par. Nos. [0007],[0011],<br>[0013]-[0015], [0022]-[0023]<br>& EP, 691312, A1   & DE, 69501523, C2 | 3,6-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    28 March, 2000 (28.03.00) | Date of mailing of the international search report<br>    11 April, 2000 (11.04.00) |
|---|---|
| Name and mailing address of the ISA/<br>    Japanese Patent Office | Authorized officer |
| Facsimile No. | Telephone No. |

Form PCT/ISA/210 (second sheet) (July 1992)

## INTERNATIONAL SEARCH REPORT

| | International application No. |
|---|---|
| | PCT/JP99/07282 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 03-008743, A (Shin-Etsu Chemical Co., Ltd.), 16 January, 1991 (16.01.91), page 2, upper left column, line 17 to page 2, upper right column, line 2; page 2, upper right column, lines 11 to 17; page 3, lower right column, line 10 to page 4, upper left column, line 2 (Family: none) | 5 |

Form PCT/ISA/210 (continuation of second sheet) (July 1992)